# EUROPÄISCHE PATENTSCHRIFT

(11) **EP 2 871 734 B1**
(45) Veröffentlichungstag und Bekanntmachung des Hinweises auf die Patenterteilung: **09.02.2022**
(21) Anmeldenummer: 13192378.1
(22) Anmeldetag: 11.11.2013
(51) Int. Cl.: H02G 1/12

(54) **Vorrichtung zum Entfernen einer inneren Umhüllung der elektrischen Leiter eines Kabels**
Device for removing an inner sheath of the electrical conductors in a cable
Dispositif permettant de retirer l'enveloppe intérieure du conducteur électrique d'un câble

(43) Veröffentlichungstag der Anmeldung: 13.05.2015
(73) Patentinhaber: Schleuniger AG, 3608 Thun (CH)
(72) Erfinder: Messina, Carmelo, 6343 Rotkreuz (CH); Alvarez, Sergio, 8630 Rüti (CH); Knuchel, Walter, 8624 Grüt (CH); Meierhans, Ivo, 6005 Luzern (CH)
(74) Vertreter: Patentbüro Paul Rosenich AG

(56) Entgegenhaltungen:
- EP-A1- 1 022 821
- GB-A- 1 471 506
- JP-A- S5 468 993
- JP-A- H04 257 802
- JP-A- S63 249 110
- JP-A- 2000 166 046
- JP-A- 2002 101 515
- US-A- 4 019 409

## Beschreibung

Die Erfindung betrifft eine Vorrichtung zum Entfernen einer inneren Umhüllung elektrischer Leiter eines Kabels, vorzugsweise einer zwischen einem Schirm und inneren Leitern befindlichen Folie, nach dem Oberbegriff des Anspruchs 1.

Die Bearbeitung von mehradrigen Kabeln, die insbesondere mit einem Schirmgeflecht und einer äusseren Ummantelung, allenfalls auch mit einer die Adern umhüllenden Folie und/oder einem zentralen Füller, versehen sind, umfasst zumindest einen der Verfahrensschritte Ablängen, Abmanteln der Leitung, Kürzen und Zurückstülpen des Schirms, Entfernen der Folie und Entfernen des innenliegenden Füllers.

Dabei stellen insbesondere HSD (High Speed Data)-Produkte sehr hohe Anforderungen an den Verarbeitungsprozess. So ist es derzeit noch nicht möglich, HSD-Kabel komplett vollautomatisch zu bearbeiten. Aktuell werden die Verarbeitungsschritte abmanteln, Schirmgeflecht schneiden und zurückstülpen, Folie sowie Füller entfernen manuell oder halbautomatisch auf einzelnen Stationen durchgeführt. Erst die weitere Verarbeitung erfolgt dann auf einem Vollautomaten. Auch der Bearbeitungsschritt des Schneidens des Schirms wird derzeit bestenfalls halbautomatisch durchgeführt.

Die US4019409A offenbart keine Vorrichtung zum Entfernen einer inneren Umhüllung elektrischer Leiter eines Kabels, sondern einen "outer cover remover" und einen "paper filler remover". Letzterer umfasst eine Aufnahme für das Kabel und einem Bearbeitungskopf mit einer Druckluftdüse. Die durch die Druckluft auseinander geblasenen Papiersträhnen werden mittels der vorderen Kante der Düse in Zusammenwirken mit der Öffnung der Aufnahme abgeschnitten. Um dabei einen Schneidvorgang zu ermöglichen, ist der Aussendurchmesser des vorderen Endes der Düse geringfügig kleiner als der Innendurchmesser der Öffnung der Aufnahme.

In der JPS63249110A ist eine Vorrichtung zur Kabelbearbeitung offenbart, bei welcher unter anderem eine Öffnung des Schirms des Kabels vorgenommen wird. Diese Vorrichtung umfasst eine Halteanordnung für ein am Ende abgemantelten Kabels sowie eine Zentriereinrichtung. Die Zentriereinrichtung weist dabei eine zentrale Öffnung auf, die sich in Richtung der Halteanordnung hin trichterförmig öffnet und durch welche das Kabel mit dem umgeschlagenen Schirm hindurch geschoben werden kann. Weiters ist eine axial auf das Kabel ausgerichtete Druckluftdüse vorhanden.

Die JP2000166046A bewirkt das Aufstellen und Zurückstülpen des Schirms durch ein Zusammenwirken von Druckluft und einer bürsten- bzw. kammartigen Struktur des Führungstrichters für das Kabelende. Die zentrale Öffnung dieses Trichters hat nur die Wirkung eines Anschlags für einen Abisolierschritt für das Kabelende.

Aufgabe der vorliegenden Erfindung ist es somit, eine Vorrichtung für die Integration in eine vollautomatische Anlage zur Kabelbearbeitung, insbesondere für HSD-Produkte, auszugestalten. Damit soll auch die Verbindung eines Vollautomaten für die Verarbeitung von zumindest an einem Ende vorbereiteten Kabeln mit der möglichst auch vollautomatischen Anlage zur Kabelvorbearbeitung ermöglicht werden.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung umfasst die Vorrichtung eine Halteanordnung/Klemmvorrichtung zum Klemmen des Kabels, und einer Sensor- und Steuereinrichtung für die Vorrichtung, allenfalls als Modul einer übergeordneten Anlagensteuerung, wobei eine buchsenförmige Aufnahme für das zu bearbeitende Ende des Kabels vorgesehen und das Kabel durch Relativbewegung von Halteanordnung/Klemmvorrichtung und Aufnahme in eine zentrale Öffnung der Aufnahme einführbar ist, und wobei ein axial in Bezug auf die Achse der zentralen Öffnung relativ zur Aufnahme bewegbarer Arbeitskopf vorgesehen ist, welcher zumindest eine zentrale, auf das Ende des Kabels ausgerichtete Druckluftdüse aufweist. Damit kann in sehr schonender Weise rasch die Folienumhüllung der inneren Leiter geöffnet werden, in dem sie durch den Druckluftstoss oder Druckluftstrom zum Aufplatzen oder zumindest zum Aufblähen gebracht wird.

Erfindungsgemäß verjüngt sich der dem Arbeitskopf zugewandte Abschnitt der zentralen Öffnung zum Arbeitskopf hin konus/trichterförmig zulaufend, wobei der minimale Innendurchmesser vorzugsweise durch einen umlaufenden Steg am hinteren stirnseitigen Ende der Öffnung gebildet ist, und weist der Arbeitskopf einen rotierenden Fräskopf zur fräsenden Entfernung der inneren Umhüllung auf.

Vorzugsweise entspricht der Durchmesser der zentralen Öffnung der Aufnahme im Wesentlichen dem Durchmesser des abgemantelten Kabelendes, gegebenenfalls mit Stützhülse, und umgelegtem Schirm, und weist vorzugsweise das dem Arbeitskopf zugewandte Ende der zentralen Öffnung einen minimalen Innendurchmesser auf, der dem Aussendurchmesser der inneren Leiter samt Folie entspricht. So kann die Druckluft rein nur auf die Folie einwirken, während die axial am Kabel hinter der freigelegten Folie befindlichen Elemente, beispielsweise der aussen am Kabel oder einer Stützhülse anliegende umgestülpte Schirm, geschützt sind.

Bevorzugt ist weiters vorgesehen, dass der der Halteanordnung/Klemmvorrichtung zugewandte Abschnitt der zentralen Öffnung sich zur Halteanordnung/Klemmvorrichtung hin konus/trichterförmig öffnend ausgeführt ist, um das Einführen und Zentrieren des zu bearbeitenden Endes des Kabels zu erleichtern.

Die erfindungsgemässe Vorrichtung ist dadurch gekennzeichnet, dass der dem Arbeitskopf zugewandte Abschnitt der zentralen Öffnung sich zum Arbeitskopf hin konus/trichterförmig zulaufend verjüngt, wobei der minimale Innendurchmesser vorzugsweise durch einen umlaufenden Steg am stirnseitigen Ende der Öffnung gebildet ist. Damit ist für das zu bearbeitende Ende des Kabels eine nochmalige Zentrierung und die exakte Ausrichtung relativ zur Druckluftdüse gewährleistet. Der umlaufende Steg führt zu einer noch besseren Abschirmung der axial am Kabel hinter der freigelegten Folie befindlichen Elemente, beispielsweise des aussen am Kabel oder einer Stützhülse anliegenden umgestülpten Schirms.

Vorteilhafterweise ist die Steuereinrichtung dazu ausgelegt, eine axiale Relativbewegung der Aufnahme und der Halteanordnung/Klemmvorrichtung in einer Länge zu bewirken, bis das abgemantelte Ende des Kabels mit freigelegter Umhüllung soweit durch die Aufnahme hindurchgeführt ist, bis das vorderste Ende des Schirms die Stelle des minimalen Innendurchmessers erreicht hat, wobei der Arbeitskopf von der Aufnahme beabstandet gehalten wird oder eine Bewegung relativ zur Aufnahme parallel zur Bewegung der Halteanordnung/Klemmvorrichtung ausführt. In dieser Weise wird der zu bearbeitende Abschnitt des Kabels, in welchem sich die freigelegte Folienumhüllung der inneren Leiter des Kabels befindet, optimal zur Bearbeitung bereitgestellt und für den ersten Schritt der Bearbeitung, der Zufuhr der Druckluft, positioniert.

Dabei ist vorzugsweise die Steuereinrichtung weiters auch dazu ausgelegt, die Aktivierung der Druckluftzufuhr durch die Druckluftdüse und die nachfolgende und/oder gleichzeitige, zumindest einmalige, vorzugsweise mehrmalige, axiale Annäherung des Arbeitskopfes an das Ende des Kabels, sowie die nachfolgende Aktivierung des Arbeitskopfes zur Entfernung der Folie zu bewirken. Durch diesen Ablauf wird die Folie durch eine Kombination der Beaufschlagung mit Druckluft und einer mechanischen Einwirkung auf die Folie, vorzugsweise die bereits zumindest zum Teil geöffnete bzw. zum Platzen gebrachte Folie, in Richtung der dem Arbeitskopf zugewandten Stirnseite der Aufnahme hin verformt bzw. zusammengedrückt.

Die Erfindung ist dadurch gekennzeichnet, dass der Arbeitskopf einen rotierenden Fräskopf aufweist, in dessen rotierender Achse vorzugsweise die Druckluftdüse und die zu dieser Druckluftdüse führende Druckluftzuleitung ausgearbeitet sind, um den oben erläuterten Ablauf bei einfacher Bauweise des Arbeitskopfes rationell und gründlich durchführen zu können.

Vorzugsweise ist die dem Kabel zugewandte Stirnseite eines Fräskopfes mit zumindest einer im Wesentlichen radial verlaufenden Schneide, vorzugsweise mit mehreren Schneiden, versehen. Diese Konstruktion gewährleistet die gute Abfuhr der weggefrästen oder abgerissenen Folienstücke aus dem Arbeitsbereich.

Eine andere Ausführungsform der Erfindung sieht vor, dass der Bearbeitungskopf mit einer axial ausgerichteten Ringschneide versehen ist, deren Umfang jenem der inneren Leiter entspricht. Anstelle einer reissenden, fräsenden Entfernung der Folie ist hier ein reiner Schneidvorgang vorgesehen, der zu weniger kleinen, unregelmässigen Folienabfällen führt.

Um einen guten, möglichst vollständigen Schneidvorgang sicherzustellen, ist dabei vorgesehen, dass der Arbeitskopf bis zum Anschlag an die Stirnseite der Aufnahme verfahrbar ist, wobei der mit der Ringschneide in Kontakt kommende Bereich der Aufnahme mit einem Elastomer versehen ist. Die Ringschneide kann dabei sogar ein wenig in das Elastomer eingedrückt werden, um das vollständige Durchschneiden der Folie zu gewährleisten.

Gemäss einer anderen Ausführungsform der Erfindung setzt zumindest eine Schneide des Arbeitskopfes eine axiale Bewegung in Richtung der Kabelachse in eine radiale Bewegung in Bezug auf die Kabelachse, entsprechend dem Tellerfederprinzip, um. Bei dieser Ausführungsform des Arbeitskopfes wird die axiale Annäherung des Arbeitskopfes an die Aufnahme in eine die Folie radial nach aussen hin abreissende Bewegung umgesetzt.

Eine weiter vorteilhafte Ausführungsform der Erfindung ist dadurch gekennzeichnet, dass im Wesentlichen radial auf das Kabelende ausgerichtete Druckluftdüsen sowie zumindest eine vorzugsweise unterhalb des Kabelendes befindliche Austrittsöffnung vorgesehen ist. Jegliche Folienabschnitte und lose Folienstücke können somit sicher und rasch aus dem Arbeitsbereich abtransportiert werden.

Vorzugsweise ist zwischen der Aufnahme und der Halteanordnung/Klemmvorrichtung eine vom abgemantelten Ende in Richtung des noch umhüllten Abschnitts des Kabels in axialer Richtung verfahrbare Scheibe mit einer Durchtrittsöffnung für das Kabel vorgesehen, welche Scheibe aus zumindest zwei im Wesentlichen radial zum Kabel bewegbaren Teilen besteht, wobei der Durchmesser der Durchtrittsöffnung geringfügig grösser ist als jener der innerhalb der Ummantelung liegenden Elemente des Kabels, wobei die Steuereinrichtung auch dazu ausgelegt ist nach der Bearbeitung der Ummantelung eine axiale Relativbewegung von Halteanordnung/Klemmvorrichtung und Scheibe zumindest in einer Länge zu bewirken, bis die Scheibe an einer vorzugsweise vorhandenen Stützhülse und/oder dem Kabelmantel und/oder dem Schirm anliegt. Durch diese Zusatzvorrichtung werden zumindest Folienreste oder aufgrund technischer Gegebenheiten nicht schneidbaren Folienabschnitte soweit als möglich auf die Ummantelung des Kabels hin zurückgestreift. Allenfalls kann bei entsprechender Grösse bzw. Adaptierbarkeit des Durchmessers der Öffnung auch zusätzlich der bereits vorhergehend zugeschnittene Schirm des Kabels, der allenfalls im Zuge der Folienentfernung unerwünscht verformt werden könnte, sicher wieder in seine endgültige Lage gebracht werden, welche er im fertig verarbeiteten Kabel einnehmen soll.

Die Erfindung betrifft auch ein Verfahren zum Entfernen einer inneren Umhüllung elektrischer Leiter eines Kabels, vorzugsweise einer zwischen einem Schirm und inneren Leitern befindlichen Folie, mittels einer Vorrichtung, die gemäß einem der vorhergehenden Ausführungsformen ausgebildet sein kann, wobei die Vorrichtung
eine Halteanordnung/Klemmvorrichtung
eine Sensor- und Steuereinrichtung für die Vorrichtung, allenfalls als Modul einer übergeordneten Anlagensteuerung,
eine buchsenförmige Aufnahme für das zu bearbeitende Ende des Kabels, und
einen axial in Bezug auf die Achse der zentralen Öffnung relativ zur Aufnahme bewegbaren Arbeitskopf, welcher zumindest eine zentrale, auf das Ende des Kabels ausgerichtete Druckluftdüse aufweist,
umfasst, wobei die Halteanordnung/Klemmvorrichtung ein abgemanteltes und von einem Schirm befreites und vorzugsweise mit einer Stützhülse versehenes Kabel klemmt und das Kabel durch Relativbewegung von Halteanordnung/Klemmvorrichtung und Aufnahme in eine zentrale Öffnung der Aufnahme eingeführt wird.

Das Verfahren ist dadurch gekennzeichnet, dass der dem Arbeitskopf zugewandte Abschnitt der zentralen Öffnung sich zum Arbeitskopf hin konus/trichterförmig zulaufend verjüngt, wobei der minimale Innendurchmesser vorzugsweise durch einen umlaufenden Steg am hinteren stirnseitigen Ende der Öffnung gebildet ist, und wobei der minimale Innendurchmesser der zentralen Öffnung so gewählt wird, dass er dem Aussendurchmesser der inneren Leiter samt der inneren Umhüllung des Kabels entspricht.

Vorzugsweise weist der Arbeitskopf einen rotierenden Fräskopf auf und wird die innere Umhüllung, vorzugsweise eine zwischen einem Schirm und inneren Leitern befindlichen Folie, durch den Fräskopf fräsend entfernt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Vorrichtung vor Beginn des Bearbeitungsvorganges des bereits herantransportierten Kabels,
- Fig. 2: die Vorrichtung der Fig. 1 in einer nachfolgenden Position, mit geklemmtem Kabel, das bereits soweit in den Bearbeitungskopf der Vorrichtung eingeführt ist, dass die Entfernung der Folie durchgeführt werden kann,
- Fig. 3: eine vergrösserte Darstellung einer Zwischenstufe zur Position der Fig. 2,
- Fig. 4: die Vorrichtung der Fig. 1 und 2 in einer weiteren Position während des Bearbeitungsvorganges, mit dem Arbeitskopf in der Stellung zur Entfernung der Folie,
- Fig. 5: die Vorrichtung der Fig. 1 bis 4 in einer Position nach Beendigung des Bearbeitungsvorganges zur Folienentfernung, mit wieder aus dem Bearbeitungskopf herausgezogenem Kabel, und
- Fig. 6: die Vorrichtung der Fig. 1 bis 5 mit in Position gebrachter Zusatzvorrichtung.

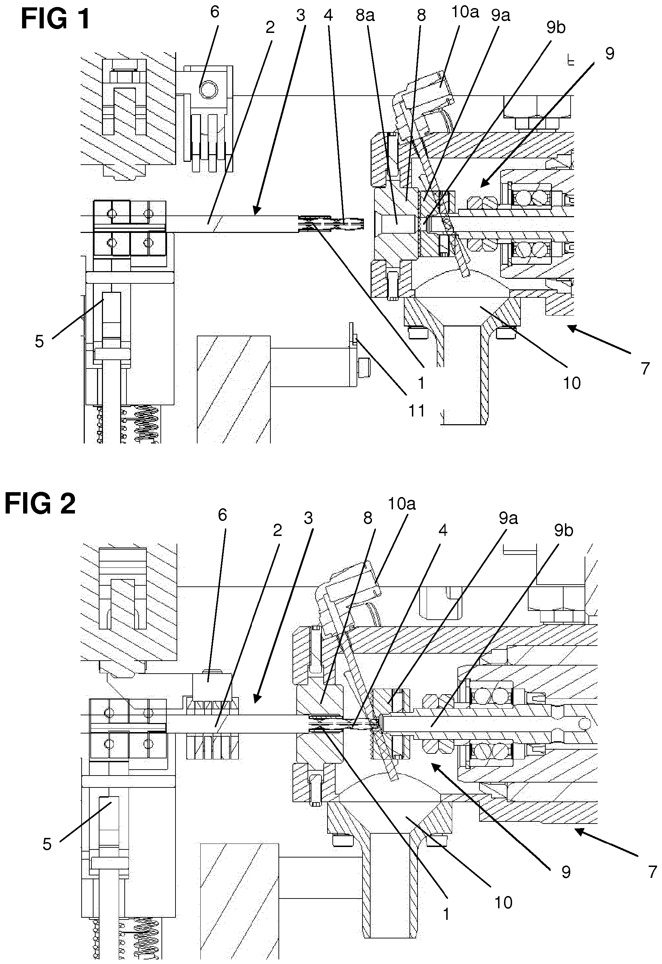

Die in Fig. 1 dargestellte beispielhafte Vorrichtung zum Entfernen einer inneren Umhüllung elektrischer Leiter 4 eines Kabels 3, vorzugsweise einer zwischen einem Schirm 1 und inneren Leitern 4 befindlichen Folie, weist eine Halteanordnung/Klemmvorrichtung 6 zum Klemmen des mittels einer Transportpalette 5 herantransportierten, bereits abgemantelten, vom Schirm 1 befreiten und vorzugsweise mit einer Stützhülse (nicht dargestellt) versehenen Kabels 3. Gegebenenfalls ist auch eine Zentriereinrichtung vorgesehen, sowie eine Sensor- und Steuereinrichtung für die Vorrichtung, die auch als Modul einer übergeordneten Anlagensteuerung realisiert werden kann.

Eine buchsenförmige Aufnahme 8 an einem Bearbeitungskopf 7 ist mit einer zentralen Öffnung 8a für das zu bearbeitende Ende des Kabels 3 vorgesehen, wobei der der Halteanordnung/Klemmvorrichtung 6 zugewandte Abschnitt der zentralen Öffnung 8a sich zur Halteanordnung/Klemmvorrichtung 6 hin konus- bzw. trichterförmig öffnend ausgeführt ist. Der Durchmesser der zentralen Öffnung 8a entspricht im Wesentlichen dem Durchmesser des abgemantelten Kabelendes, gegebenenfalls mit Stützhülse, und umgelegtem Schirm 1.

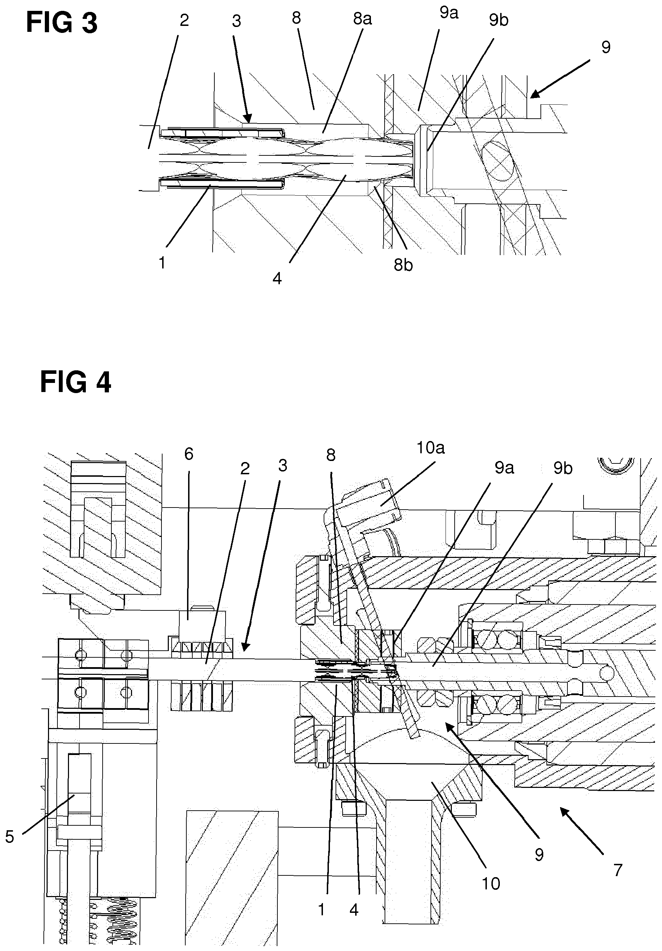

Die zentrale Öffnung 8a hat einen minimalen Innendurchmesser an zumindest einer Stelle, der dem Aussendurchmesser der inneren Leiter 4 samt Folie entspricht. Dieser minimale Innendurchmesser ist an dem der Halteanordnung/Klemmvorrichtung 6 abgewandten Ende der zentralen Öffnung 8a der Aufnahme 8 gelegen, an der einem nachgeordneten Arbeitskopf 9 des Bearbeitungskopfes 7 zugewandten hinteren Stirnfläche der Aufnahme 8. Dabei ist ein weiterer konus- bzw. trichterförmig ausgebildeter Abschnitt der zentralen Öffnung 8a vorgesehen, und zwar der dem Arbeitskopf 9 zugewandte, in die hintere Stirnfläche der Aufnahme 8 mündende Abschnitt der zentralen Öffnung 8a, der sich zum Arbeitskopf 9 hin zulaufend verjüngt. Der minimale Innendurchmesser kann dabei durch einen zusätzlich den Durchmesser noch stufenartig verringernden umlaufenden Steg 8b am Ende des konus- bzw. trichterförmig zulaufenden Abschnitts der zentralen Öffnung 8a und unmittelbar am stirnseitigen Ende der Öffnung 8a gebildet sein (siehe Fig. 3). Ein derartiger Steg schirmt die zentrale Öffnung 8a und das darin aufgenommene Kabel 3 sicher gegen die Druckluft aus der Druckluftdüse 9b des Arbeitskopfs 9 bzw. dessen Fräs- oder Schneidkopf 9a ab. So kann die Druckluft rein nur auf die Folie im aus der Aufnahme 8 in Richtung auf den Arbeitskopf 9 herausragenden Abschnitt des Kabels 3 einwirken, um diese aufplatzen zu lassen.

Fig. 2 stellt die Vorrichtung in einer im Bearbeitungsprozess etwas späteren Position dar, in welcher das Kabel 3 bereits in der Halteanordung/Klemmvorrichtung 6 geklemmt und durch eine Relativbewegung von Halteanordnung/Klemmvorrichtung 6 und Bearbeitungskopf 7 in die zentrale Öffnung 8a der Aufnahme 8 eingeführt worden ist. Dies ist bereits in einem Ausmass geschehen, dass der Abschnitt des Kabels 3 mit dem auf die Ummantelung 2 umgelegten, bereits geschnittenen Schirm 1 vollständig in der Öffnung 8a aufgenommen ist und nur die inneren Leiter 4 mit deren Folienummantelung auf der Hinterseite der Aufnahme 8 in Richtung des Arbeitskopfes 9 hinausragen. Falls der Arbeitskopf 9 nicht bereits von der Aufnahme 8 beabstandet war, wird er während der Relativbewegung von Halteanordnung/Klemmvorrichtung 6 ebenfalls in einer Weise bewegt, dass er sich von der Aufnahme 8 entfernt. Gesteuert werden diese Bewegungen durch Implementierung entsprechender Abläufe in der Steuereinrichtung der Vorrichtung, beispielsweise in Form eines darin lauffähigen Computerprogrammproduktes oder einer Mikroprozessorsteuerung. Gemäss dem implementierten Ablauf erfolgt die axiale Relativbewegung in einem Ausmass, bis das abgemantelte Ende des Kabels 3 mit freigelegter Umhüllung soweit durch die Aufnahme 8 hindurchgeführt ist, bis das vorderste Ende des Schirms 1, d.h. der Abschnitt in dem der Schirm 1 aus der Ummantelung 2 austritt und nach hinten hin auf die Ummantelung 2 umgeschlagen ist, die Stelle des minimalen Innendurchmessers der zentralen Öffnung 8a erreicht hat.

Anschliessend kann, vorzugsweise durch einen in der Steuereinrichtung implementierten zweiten Ablauf, die Aktivierung der Druckluftzufuhr durch die Druckluftdüse 9b des Arbeitskopfes 9 erfolgen. Anschliessend daran wiederum, allenfalls bereits gleichzeitig damit, wird der Arbeitskopf 9 ein- oder vorzugsweise mehrmals an die Hinterseite der Aufnahme 8 herangeführt. Dabei treten die inneren Leiter 4 in die Öffnung der Druckluftdüse 9b ein und durch eine vorzugsweise kombinierte Wirkung von Druckluft und mechanischer Einwirkung des Arbeitskopfes 9 wird die zuerst noch die inneren Leiter umhüllende Folie aufgeweitet, zum Platzen gebracht und gegen die hintere Stirnfläche der Aufnahme 8 gepresst.

Das vordere Ende des Arbeitskopfes 9 ist als rotierender Fräskopf 9a ausgebildet, in dessen rotierender Achse vorzugsweise die Druckluftdüse 9b und die zu dieser Druckluftdüse 9b führende Druckluftzuleitung ausgearbeitet sind. Die dem Kabel 3, d.h. der Aufnahme 8, zugewandte Stirnseite des Fräskopfes 9a ist mit zumindest einer im Wesentlichen radial verlaufenden Schneide, vorzugsweise mit mehreren Schneiden, versehen. Alternative Ausführungsformen können zumindest eine axial ausgerichtete Ringschneide vorsehen, wobei der Umfang der innersten Ringschneide jenem der inneren Leiter 4 entspricht, oder es kann zumindest eine Schneide des Arbeitskopfes 9 eine axiale Bewegung in Richtung der Kabelachse in eine radiale Bewegung in Bezug auf die Kabelachse umsetzen, entsprechend dem Tellerfederprinzip. In allen Fällen ist der Arbeitskopf 9 vorzugsweise bis zum Anschlag an die hintere Stirnseite der Aufnahme 8 verfahrbar (siehe Fig. 4), wobei der mit der oder jeder Ringschneide in Kontakt kommende Bereich der Aufnahme 8 mit einem Elastomer, beispielsweise entsprechend der Ringschneide ebenfalls ringförmig, versehen sein kann.

Schliesslich sind zur raschen und vollständigen Abfuhr aller abgeschnittenen oder abgerissenen Folienstücke zumindest eine Austrittsöffnung 10, vorteilhafterweise unterhalb des Arbeitskopfes 9, sowie vorzugsweise zumindest eine im Wesentlichen radial auf das Kabelende ausgerichtete Druckluftdüse 10a, vorteilhafterweise oberhalb des Arbeitskopfes 9, vorgesehen.

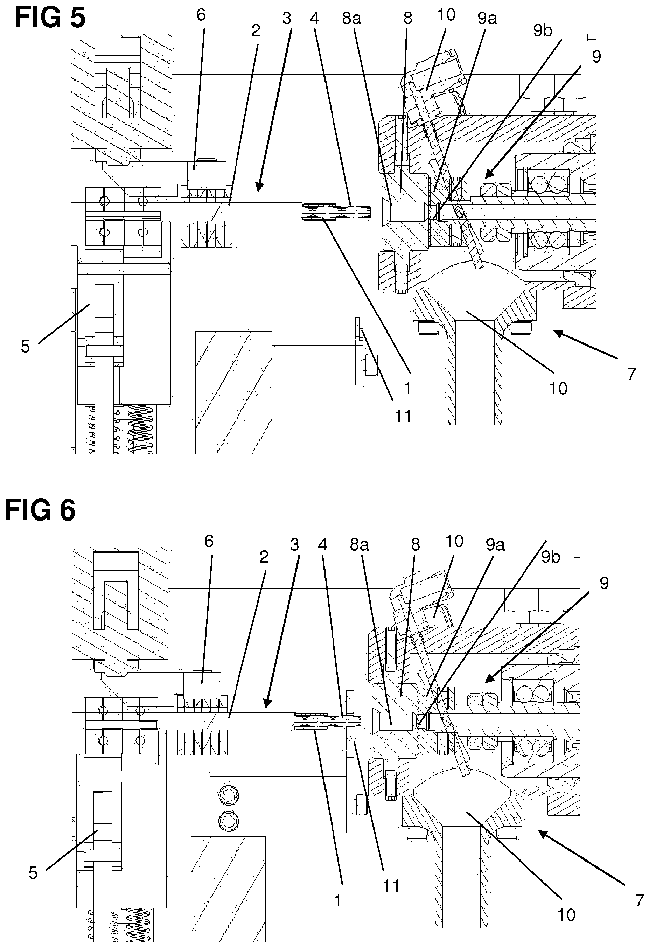

Vorzugsweise ist zwischen der Aufnahme 8 und der Halteanordnung/Klemmvorrichtung 6 eine vom abgemantelten Ende in Richtung des noch umhüllten Abschnitts des Kabels 3, d.h. in axialer Richtung auf die Halteanordnung/Klemmvorrichtung 6 hin, verfahrbare Scheibe 11 mit einer Durchtrittsöffnung für das Kabel 3 vorgesehen. Diese Scheibe 11 besteht aus zumindest zwei im Wesentlichen radial zum Kabel bewegbaren Teilen und wird nach dem vollständigen Herausziehen des Kabels 3 aus dem Bearbeitungskopf 7 (siehe Fig. 5) in Höhe der nur von der Folie befreiten inneren Leiter 4 angesetzt. Der Durchmesser der Durchtrittsöffnung in der Scheibe 11 ist nur geringfügig grösser ist als jener der innerhalb der Ummantelung 2 liegenden Elemente des Kabels 3, und in der Steuereinrichtung ist ein weiterer Ablauf implementiert, der für eine axiale Relativbewegung von Halteanordnung/Klemmvorrichtung 6 und Scheibe 11 sorgt. Dabei wird die Scheibe 11 um eine Strecke bewegt, bis allfällige Folienreste oder der aufgrund der geometrischen Verhältnisse von Kabel 3 und/oder Bearbeitungskopf 7 nicht entfernbare Länge der Folie komplett zurückgeschoben ist und vorzugsweise an der Ummantelung 2 bzw. dem zurückgestülpten Schirm 1 oder an einer allfälligen Stützhülse anliegt. Bei entsprechendem Durchmesser der Öffnung der Scheibe 11, vorzugsweise durch Vergrösserung des Durchmessers nach Erreichen der Ummantelung 2 des Kabels 3, kann allenfalls auch der bereits vorhergehend zugeschnittene Schirm 1 des Kabels 3, der allenfalls im Zuge der Folienentfernung unerwünscht verformt werden könnte, in seine gewünschte Lage gebracht werden.

### Bezugszeichenliste

- 1: Schirm
- 2: Ummantelung
- 3: Kabel
- 4: Leiter, Litzen
- 5: Transportpalette
- 6: Halteanordnung/Klemmeinrichtung
- 7: Bearbeitungskopf
- 8: Aufnahme für Kabel
- 8a: Zentrale Öffnung der Aufnahme
- 8b: Umlaufender Steg minimalen Innendurchmessers
- 9: Arbeitskopf
- 9a: Fräskopf
- 9b: Druckluftdüse
- 10: Absaugöffnung
- 10a: Radiale Druckluftdüse
- 11: Scheibe

## Patentansprüche

1. Vorrichtung zum Entfernen einer inneren Umhüllung elektrischer Leiter (4) eines Kabels (3), umfassend eine Halteanordnung/Klemmvorrichtung (6) zum Klemmen des abgemantelten und von einem Schirm (1) befreiten Kabels (3), und einer Sensor- und Steuereinrichtung für die Vorrichtung, allenfalls als Modul einer übergeordneten Anlagensteuerung, wobei eine buchsenförmige Aufnahme (8) für das zu bearbeitende Ende des Kabels (3) vorgesehen ist und das Kabel (3) durch Relativbewegung von Halteanordnung/Klemmvorrichtung (6) und Aufnahme in eine zentrale Öffnung (8a) der Aufnahme (8) einführbar ist, und wobei ein axial in Bezug auf die Achse der zentralen Öffnung (8a) relativ zur Aufnahme (8) bewegbarer Arbeitskopf (9) vorgesehen ist, welcher zumindest eine zentrale, auf das Ende des Kabels ausgerichtete Druckluftdüse (9b) aufweist, wobei der dem Arbeitskopf (9) zugewandte Abschnitt der zentralen Öffnung (8a) sich zum Arbeitskopf (9) hin konus/trichterförmig zulaufend verjüngt, wobei der minimale Innendurchmesser vorzugsweise durch einen umlaufenden Steg (8b) am hinteren stirnseitigen Ende der Öffnung (8a) gebildet ist, und wobei der Arbeitskopf (9) einen rotierenden Fräskopf (9a) zur fräsenden Entfernung der inneren Umhüllung aufweist.

2. Vorrichtung nach Anspruch 1, **dadurch gekennzeichnet, dass** der der Halteanordnung/Klemmvorrichtung (6) zugewandte Abschnitt der zentralen Öffnung (8a) sich zur Halteanordnung/Klemmvorrichtung (6) hin konus/trichterförmig öffnend ausgeführt ist.

3. Vorrichtung nach einem der vorhergehenden Ansprüche, **dadurch gekennzeichnet, dass** die Steuereinrichtung ausgelegt ist, um eine axiale Relativbewegung der Aufnahme (8) und der Halteanordnung/Klemmvorrichtung (6) in einer Länge zu bewirken, bis das abgemantelte Ende des Kabels (3) mit freigelegter Umhüllung soweit durch die Aufnahme (8) hindurchgeführt ist, bis das vorderste Ende des Schirms (1) die Stelle des minimalen Innendurchmessers erreicht hat, wobei der Arbeitskopf (9) von der Aufnahme (8) beabstandet gehalten wird oder eine Bewegung relativ zur Aufnahme (8) parallel zur Bewegung der Halteanordnung/Klemmvorrichtung (6) ausführt.

4. Vorrichtung nach Anspruch 3, **dadurch gekennzeichnet, dass** die Steuereinrichtung weiters auch dazu ausgelegt ist, die Aktivierung der Druckluftzufuhr durch die Druckluftdüse (9b) und die nachfolgende und/oder gleichzeitige, zumindest einmalige, vorzugsweise mehrmalige, axiale Annäherung des Arbeitskopfes (9) an die hintere Stirnseite der Aufnahme (8) sowie die nachfolgende Aktivierung des Arbeitskopfes (9) zur Entfernung der Folie vorzunehmen.

5. Vorrichtung nach einem der vorhergehenden Ansprüche, **dadurch gekennzeichnet, dass** in der rotierenden Achse des Fräskopfes (9a) die Druckluftdüse (9b) und die zu dieser Druckluftdüse führende Druckluftzuleitung ausgearbeitet sind.

6. Vorrichtung nach einem der Ansprüche 1 bis 5, **dadurch gekennzeichnet, dass** die der Aufnahme (8) zugewandte Stirnseite des Fräskopfes (9a) mit zumindest einer im Wesentlichen radial verlaufenden Schneide, vorzugsweise mit mehreren Schneiden, versehen ist.

7. Vorrichtung nach einem der vorhergehenden Ansprüche, **dadurch gekennzeichnet, dass** im Wesentlichen radial auf das Kabelende ausgerichtete Druckluftdüsen (10a) sowie zumindest eine vorzugsweise unterhalb des Kabelendes befindliche Austrittsöffnung (10) vorgesehen ist.

8. Verfahren zum Entfernen einer inneren Umhüllung elektrischer Leiter (4) eines Kabels (3), vorzugsweise einer zwischen einem Schirm (1) und inneren Leitern (4) befindlichen Folie, mittels einer Vorrichtung, vorzugsweise gemäß einem der vorhergehenden Ansprüche, wobei die Vorrichtung
eine Halteanordnung/Klemmvorrichtung (6)
eine Sensor- und Steuereinrichtung für die Vorrichtung, allenfalls als Modul einer übergeordneten Anlagensteuerung,
eine buchsenförmige Aufnahme (8) für das zu bearbeitende Ende des Kabels (3), und
einen axial in Bezug auf die Achse der zentralen Öffnung (8a) relativ zur Aufnahme (8) bewegbaren Arbeitskopf (9), welcher zumindest eine zentrale, auf das Ende des Kabels ausgerichtete Druckluftdüse (9b) aufweist,
umfasst, wobei die Halteanordnung/Klemmvorrichtung (6) ein abgemanteltes und von einem Schirm (1) befreites und vorzugsweise mit einer Stützhülse versehenes Kabel (3) klemmt und das Kabel (3) durch Relativbewegung von Halteanordnung/Klemmvorrichtung (6) und Aufnahme in eine zentrale Öffnung (8a) der Aufnahme (8) eingeführt wird, wobei der dem Arbeitskopf (9) zugewandte Abschnitt der zentralen Öffnung (8a) sich zum Arbeitskopf (9) hin konus/trichterförmig zulaufend verjüngt, wobei der minimale Innendurchmesser vorzugsweise durch einen umlaufenden Steg (8b) am hinteren stirnseitigen Ende der Öffnung (8a) gebildet ist,
wobei der minimale Innendurchmesser der zentralen Öffnung (8a) so gewählt wird, dass er dem Aussendurchmesser der von der inneren Umhüllung umhüllten elektrischen Leiter (4) samt der inneren Umhüllung des Kabels (3) entspricht.

9. Verfahren nach Anspruch 8, **dadurch gekennzeichnet, dass** der Arbeitskopf (9) einen rotierenden Fräskopf (9a) aufweist und dass die innere Umhüllung, vorzugsweise eine zwischen einem Schirm (1) und inneren Leitern (4) befindlichen Folie, durch den Fräskopf (9a) fräsend entfernt wird.

10. Verfahren nach Anspruch 8 oder 9, **dadurch gekennzeichnet, dass** der Durchmesser der zentralen Öffnung (8a) der Aufnahme (8) im Wesentlichen dem Durchmesser des abgemantelten Kabelendes, gegebenenfalls mit Stützhülse, und umgelegtem Schirm (1) entspricht.

11. Verfahren nach einem der Ansprüche 8 bis 10, **dadurch gekennzeichnet, dass** gemäß einem in der Steuereinrichtung implementierten Ablauf eine axiale Relativbewegung der Aufnahme (8) und der Halteanordnung/Klemmvorrichtung (6) in einer Länge bewirkt wird, bis das abgemantelte Ende des Kabels (3) mit freigelegter Umhüllung soweit durch die Aufnahme (8) hindurchgeführt ist, bis das vorderste Ende des Schirms (1) die Stelle des minimalen Innendurchmessers erreicht hat, wobei der Arbeitskopf (9) von der Aufnahme (8) beabstandet gehalten wird oder eine Bewegung relativ zur Aufnahme (8) parallel zur Bewegung der Halteanordnung/Klemmvorrichtung (6) ausführt.

12. Verfahren nach Anspruch 11, **dadurch gekennzeichnet, dass** gemäß einem in der Steuereinrichtung implementierten zweiten Ablauf die Aktivierung der Druckluftzufuhr durch die Druckluftdüse (9b) und die nachfolgende und/oder gleichzeitige, zumindest einmalige, vorzugsweise mehrmalige, axiale Annäherung des Arbeitskopfes (9) an die hintere Stirnseite der Aufnahme (8) sowie die nachfolgende Aktivierung des Arbeitskopfes (9) zur Entfernung der Folie erfolgt.

13. Verfahren nach einem der Ansprüche 8 bis 12, **dadurch gekennzeichnet, dass** zwischen der Aufnahme (8) und der Halteanordnung/Klemmvorrichtung (6) eine vom abgemantelten Ende in Richtung des noch umhüllten Abschnitts des Kabels (3) in axialer Richtung verfahrbare Scheibe (11) mit einer Durchtrittsöffnung für das Kabel (3) vorgesehen ist, welche Scheibe (11) aus zumindest zwei im Wesentlichen radial zum Kabel (3) bewegbaren Teilen besteht, wobei der Durchmesser der Durchtrittsöffnung geringfügig grösser ist als jener der innerhalb der Ummantelung (2) liegenden Elemente des Kabels (3), wobei gemäß einem in der Steuereinrichtung implementierten dritten Ablauf nach der Bearbeitung der Folie eine axiale Relativbewegung von Halteanordnung/Klemmvorrichtung (6) und Scheibe (11) zumindest in einer Länge bewirkt wird, bis die Scheibe (11) an einer vorzugsweise vorhandenen Stützhülse und/oder dem Kabelmantel (2) und/oder dem Schirm (1) anliegt.

## Claims

1. Apparatus for removing an inner sheath of electrical conductors (4) of a cable (3), comprising a holding arrangement/clamping apparatus (6) for clamping the stripped cable (3) from which a shield (1) has been removed, and a sensor and control device for the apparatus, if applicable as a module of a higher-level system control, wherein a socket-shaped receiving means (8) is provided for the end of the cable (3) to be processed and the cable (3) is insertable into a central opening (8a) of the receiving means (8) by relative movement of the holding arrangement/clamping device (6) and the receiving means, and wherein a working head (9) is provided which is movable axially with regards to the axis of the central opening (8a) relative to the receiving means (8), which working head (9) has at least one central compressed air nozzle (9b) oriented to the end of the cable, wherein the portion of the central opening (8a) facing the working head (9) tapers toward the working head (9) in a cone/funnel shape, wherein the minimum inner diameter is preferably formed by a circumferential bar (8b) at the rear end of the opening (8a), and wherein the working head (9) has a rotating milling head (9a) for milling away the inner sheath.

2. Apparatus according to claim 1, **characterized in that** the portion of the central opening (8a) facing the holding arrangement/clamping apparatus (6) is designed such that it opens toward the holding arrangement/clamping apparatus (6) in the shape of a cone/funnel.

3. Apparatus according to any one of the preceding claims, **characterized in that** the control device is designed to cause an axial relative movement of the receiving means (8) and the holding arrangement/clamping apparatus (6) over a distance until the stripped end of the cable (3) with exposed sheath is passed so far through the holder (8) that the foremost end of the shield (1) has reached the location of the minimum inner diameter, wherein the working head (9) is kept spaced apart from the receiving means (8) or performs a movement relative to the receiving means (8) parallel to the movement of the holding arrangement/clamping device (6).

4. Apparatus according to claim 3, **characterized in that** the control device furthermore is designed to perform the activation of the compressed air supply via the compressed air nozzle (9b), and the activation of the subsequent and/or simultaneous, at least one-time, preferably repeated, axial approach of the working head (9) to the rear face of the receiving means (8), as well as the subsequent activation of the working head (9) to remove the foil.

5. Apparatus according to any one of the preceding claims, **characterized in that** the compressed air nozzle (9b) and a compressed air supply line leading to this compressed air nozzle are designed in the rotating axle of the milling head (9a).

6. Apparatus according to any one of claims 1 to 5, **characterized in that** the face of the milling head (9a) facing the receiving means (8) is provided with at least one cutting edge extending essentially radially, preferably provided with multiple cutting edges.

7. Apparatus according to any one of the preceding claims, **characterized in that** compressed air nozzles (10a) oriented essentially radially to the end of the cable, and at least one outlet (10) preferably located below the end of the cable, are provided.

8. Method for removing an inner sheath of electrical conductors (4) of a cable (3), preferably a foil located between a shield (1) and inner conductors (4), by means of an apparatus, preferably according to one of the preceding claims, wherein the apparatus comprises
a holding arrangement/clamping apparatus (6),
a sensor and control device for the apparatus, if applicable as a module of a higher-level system control,
a socket-shaped receiving means (8) for the end of the cable (3) to be processed, and
a working head (9) which is movable axially with regards to the axis of the central opening (8a) relative to the receiving means (8) and which has at least one central compressed air nozzle (9b) oriented to the end of the cable,
wherein the holding arrangement/clamping device (6) clamps the cable (3) freed from the shield (1) and preferably provided with a support sleeve, and the cable (3) is inserted in a central opening (8a) of the receiving means (8) by relative movement of the holding arrangement/clamping device (6) and the receiving means, wherein the portion of the central opening (8a) facing the working head (9) tapers toward the working head (9) in a cone/funnel shape, wherein the minimum inner diameter is preferably formed by a circumferential bar (8b) at the rear end of the opening (8a), wherein the minimum inner diameter of the central opening (8a) is selected such that it corresponds to the outer diameter of the electrical conductors (4) sheathed by the inner sheath, including the inner sheath of the cable (3) .

9. Method according to claim 8, **characterized in that** the working head (9) has a rotating milling head (9a) and that the inner sheath, preferably a foil located between a shield (1) and inner conductors (4), is removed by milling with the milling head (9a) .

10. Method according to claim 8 or 9, **characterized in that** the diameter of the central opening (8a) of the receiving means (8) essentially corresponds to the diameter of the stripped cable end, optionally with support sleeve, and the folded shield (1).

11. Method according to any one of claims 8 to 10, **characterized in that** a process implemented in the control device results in an axial relative movement of the receiving means (8) and the holding arrangement/clamping apparatus (6) over a distance until the stripped end of the cable (3) with exposed sheath is passed so far through the holder (8) that the foremost end of the shield (1) has reached the location of the minimum inner diameter, wherein the working head (9) is kept spaced apart from the receiving means (8) or performs a movement relative to the receiving means (8) parallel to the movement of the holding arrangement/clamping device (6).

12. Method according to claim 11, **characterized in that** a second process implemented in the control device furthermore results in the activation of the compressed air supply via the compressed air nozzle (9b), the activation of the subsequent and/or simultaneous, at least one-time, preferably repeated, axial approach of the working head (9) to the rear face of the receiving means (8), as well as the subsequent activation of the working head (9) to remove the foil.

13. Method according to any one of claims 8 to 12, **characterized in that** a disc (11) with a passage opening for the cable (3) is provided between the receiving means (8) and the holding arrangement/clamping device (6), which disc (11) is movable from the stripped end in the direction of the still sheathed portion of the cable (3) in the axial direction (11) and consists of at least two parts which are movable in a direction essentially radial to the cable (3), wherein the diameter of the passage opening is slightly greater than that of the elements of the cable (3) positioned within the sheathing (2), wherein a third process implemented in the control device after the foil is processed results in an axial relative movement of the holding arrangement/clamping device (6) and the disc (11) at least over a distance until the disc (11) rests on a preferably present support sleeve and/or the cable sheath (2) and/or the shield (1).

## Revendications

1. Dispositif pour retirer une gaine intérieure de conducteurs électriques (4) d'un câble (3), comprenant un dispositif de maintien/de serrage (6) pour serrer le câble (3) dénudé et libéré d'un blindage (1), et un système de détection et de commande pour le dispositif, éventuellement en tant que module d'une commande d'installation supérieure, sachant qu'un logement (8) en forme de douille est prévu pour l'extrémité à traiter du câble (3) et que le câble (3) peut être introduit dans une ouverture centrale (8a) du logement (8) par mouvement relatif du dispositif de maintien/de serrage (6) et du logement et sachant qu'une tête de travail (9) mobile axialement par rapport à l'axe de l'ouverture centrale (8a) eu égard au logement (8) est prévue, laquelle comporte au moins une buse d'air comprimé (9b) centrale, orientée sur l'extrémité du câble, sachant que la section de l'ouverture centrale (8a), tournée vers la tête de travail (9) se réduit vers la tête de travail (9) en se terminant en forme de cône/d'entonnoir, sachant que le diamètre intérieur minimal est formé de préférence par une moulure (8b) périphérique sur l'extrémité frontale arrière de l'ouverture (8a) et sachant que la tête de travail (9) comporte une tête de fraisage (9a) rotative pour l'enlèvement par fraisage de la gaine intérieure.

2. Dispositif selon la revendication 1, **caractérisé en ce que** la section de l'ouverture centrale (8a) tournée vers le dispositif de maintien/de serrage (6) est exécutée s'ouvrant en forme de cône/d'entonnoir vers le dispositif de maintien/de serrage (6).

3. Dispositif selon l'une quelconque des revendications précédentes, **caractérisé en ce que** le système de commande est conçu pour entraîner un mouvement relatif axial du logement (8) et du dispositif de maintien/de serrage (6) sur une longueur jusqu'à ce que l'extrémité dénudée du câble (3) avec la gaine libérée soit passée à travers le logement (8) jusqu'à ce que l'extrémité la plus avancée du blindage (1) ait atteint la position du diamètre intérieur minimal, sachant que la tête de travail (9) est maintenue à distance du logement (8) ou exécute un mouvement par rapport au logement (8) parallèlement au mouvement du dispositif de maintien/de serrage (6).

4. Dispositif selon la revendication 3, **caractérisé en ce que** le système de commande est en plus conçu également pour procéder à l'activation de l'alimentation en air comprimé à travers la buse d'air comprimé (9b) et l'approche axiale suivante et/ou simultanée, au moins unique, de préférence répétée, de la tête de travail (9) sur la face frontale arrière du logement (8) et l'activation suivante de la tête de travail (9) pour l'enlèvement du film.

5. Dispositif selon l'une quelconque des revendications précédentes, **caractérisé en ce que** dans l'axe de rotation de la tête de fraisage (9a) sont aménagées la buse d'air comprimé (9b) et le conduit d'alimentation d'air comprimé menant à cette buse d'air comprimé.

6. Dispositif selon l'une quelconque des revendications 1 à 5, **caractérisé en ce que** la face avant de la tête de fraisage (9a) tournée vers le logement (8) est au moins dotée d'un élément de coupe, de préférence de plusieurs éléments de coupe, passant pour l'essentiel dans le sens radial.

7. Dispositif selon l'une quelconque des revendications précédentes, **caractérisé en ce que** des buses d'air comprimé (10a) orientées pour l'essentiel radialement à l'extrémité de câble et au moins une ouverture de sortie (10) se trouvant en dessous de l'extrémité de câble sont prévues.

8. Procédé pour retirer une gaine intérieure de conducteurs électriques (4) d'un câble (3), de préférence d'un film se trouvant entre un blindage (1) et des conducteurs intérieurs (4), au moyen d'un dispositif, de préférence selon l'une des revendications précédentes, sachant que le dispositif comprend
un dispositif de maintien/de serrage (6),
un système de détection et de commande pour le dispositif, éventuellement en tant que module d'une commande d'installation supérieure,
un logement (8) en forme de douille pour l'extrémité à traiter du câble (3), et
une tête de travail (9) mobile axialement par rapport à l'axe de l'ouverture centrale (8a) eu égard au logement (8), laquelle comporte au moins une buse d'air comprimé (9b) centrale, orientée sur l'extrémité du câble,
sachant que le système de maintien/de serrage (6) serre un câble (3) dénudé et libéré d'un blindage (1) et de préférence doté d'un manchon de support et le câble (3) est introduit par un mouvement relatif du système de maintien/de serrage (6) et du logement dans une ouverture centrale (8a) du logement (8), sachant que la section de l'ouverture centrale (8a) tournée vers la tête de travail (9) se réduit vers la tête de travail (9) se terminant en forme de cône/d'entonnoir, sachant que le diamètre intérieur minimal est formé de préférence par une moulure (8b) périphérique sur l'extrémité frontale arrière de l'ouverture (8a),
sachant que le diamètre intérieur minimal de l'ouverture centrale (8a) est choisi de manière à ce qu'il corresponde au diamètre extérieur des conducteurs électriques (4) entourés de la gaine intérieure ensemble avec la gaine intérieure du câble (3).

9. Procédé selon la revendication 8, **caractérisé en ce que** la tête de travail (9) comporte une tête de fraisage rotative (9a) et **en ce que** la gaine intérieure, de préférence un film se trouvant entre un blindage (1) et les conducteurs intérieurs (4), est enlevée par fraisage au moyen de la tête de fraisage (9a).

10. Procédé selon la revendication 8 ou 9, **caractérisé en ce que** le diamètre de l'ouverture centrale (8a) du logement (8) correspond pour l'essentiel au diamètre de l'extrémité de câble dénudée, le cas échéant avec un manchon de support, et au blindage (1) posé autour.

11. Procédé selon l'une quelconque des revendications 8 à 10, **caractérisé en ce que** selon un cycle mis en œuvre dans le système de commande, un mouvement relatif axial du logement (8) et du système de maintien/de serrage (6) est causé sur une longueur jusqu'à ce que l'extrémité dénudée du câble (3) avec la gaine libérée soit passée à travers le logement (8) jusqu'à ce que l'extrémité la plus avancée du blindage (1) ait atteint la position du diamètre intérieur minimal, sachant que la tête de travail (9) est maintenue à distance du logement (8) ou exécute un mouvement par rapport au logement (8) parallèlement au mouvement du système de maintien/de serrage (6).

12. Procédé selon la revendication 11, **caractérisé en ce que** selon un deuxième cycle mis en œuvre dans le système de commande, ont lieu l'activation de l'alimentation en air comprimé à travers la buse d'air comprimé (9b) et l'approche axiale suivante et/ou simultanée, au moins unique, de préférence répétée, de la tête de travail (9) sur la face frontale arrière du logement (8) et l'activation suivante de la tête de travail (9) pour l'enlèvement du film.

13. Procédé selon l'une quelconque des revendications 8 à 12, **caractérisé en ce qu'**entre le logement (8) et le dispositif de maintien/de serrage (6), un disque (11) avec une ouverture de passage pour le câble (3), déplaçable dans la direction axiale d'une extrémité dénudée en direction de la section encore gainée de câble (3) est prévu, lequel disque (11) est composé d'au moins deux parties mobiles pour l'essentiel radialement vers le câble (3), sachant que le diamètre de l'ouverture de passage est légèrement plus grand que celui des éléments situés à l'intérieur du gainage (2) du câble (3), sachant que selon un troisième cycle mis en œuvre dans le système de commande après le traitement du film, un mouvement relatif axial du dispositif de maintien/de serrage (6) et du disque (11) est causé au moins dans une longueur jusqu'à ce que le disque (11) vienne s'appliquer à un manchon de support de préférence existante et/ou à la gaine de câble (2) et/ou au blindage (1).
